# EUROPÄISCHE PATENTSCHRIFT

(11) **EP 1 706 658 B1**
(45) Veröffentlichungstag und Bekanntmachung des Hinweises auf die Patenterteilung: **23.10.2013**
(21) Anmeldenummer: 04803830.1
(22) Anmeldetag: 14.12.2004
(51) Int. Cl.: F16H 3/093, F16H 3/60

(54) **MEHRGÄNGIGES SCHALTGETRIEBE**
MULTISPEED MANUAL TRANSMISSION
BOITE DE VITESSES A PLUSIEURS RAPPORTS

(30) Priorität: 21.01.2004 DE 102004002969
(43) Veröffentlichungstag der Anmeldung: 04.10.2006
(60) Teilanmeldung: 11163354.1
(73) Patentinhaber: ZF FRIEDRICHSHAFEN Aktiengesellschaft, 88038 Friedrichshafen (DE)
(72) Erfinder: BUCK, Gerhard, 88048 Friedrichshafen (DE); REBHOLZ, Wolfgang, 88045 Friedrichshafen (DE); STÜTZLE, Siegfried, 88045 Friedrichshafen (DE); RIEDHAMMER, Michael, 88697 Bermatingen (DE); BURKHART, Hugo, 88213 Ravensburg (DE); HERLITZEK, Michael, 88097 Eriskirch (DE); LEGNER, Jürgen, 88048 Friedrichshafen (DE); SCHNEIDER, Jochen, 88069 Tettnang (DE); THIELMANN, Michael, 88048 Friedrichshafen (DE); FISCHER, Roland, 88094 Oberteuringen (DE)
(86) Internationale Anmeldenummer: PCT/EP2004/014202
(87) Internationale Veröffentlichungsnummer: WO 2005/071286

(56) Entgegenhaltungen:
- EP-A- 0 673 480
- EP-A- 0 673 481
- EP-A- 0 759 129
- EP-A- 0 759 130
- EP-A- 0 796 400

## Beschreibung

Die vorliegende Erfindung betrifft ein schaltbares mehrgängiges Wendegetriebe, umfassend eine Eingangswelle, Vorgelegewellen, wobei auf den Vorgelegewellen Zahnräder und/oder über Schaltkupplungen zur Gang- oder Richtungsschaltung drehfest mit den Vorgelegewellen verbindbare Losräder angeordnet sind, und eine Ausgangswelle, gemäß dem Oberbegriff des Patentanspruchs 1.

Derartige Getriebe werden üblicherweise in Dumpern, Radladern, Baggerladern und Staplern, aber auch bei Fahrzeugen, die auf der Strasse betrieben werden, z. B. Kranfahrzeugen eingesetzt. Hierbei handelt es sich in der Regel um Lastschaltgetriebe mit vorgeschaltetem hydrodynamischen Drehmomentwandler, bei denen sich eine stufenlose und selbsttätige Drehmomentsteigerung bei anwachsendem Arbeitswiderstand des Kraftfahrzeuges, beispielsweise einer Baumaschine, erreichen lässt. Es können hierbei Getriebeantriebsmomente erzeugt werden, die etwa dem dreifachen Wert des Motordrehmomentes entsprechen.

Der Kraftfluss in den einzelnen Gängen eines Getriebes der eingangs genannten Art wird durch eine Kombination von hydraulisch schaltbaren Kupplungen hergestellt. Diese Kupplungen müssen unter anderem z.B. bei Radladern zum Reversieren unter Last schaltbar sein und können daher viel Energie aufnehmen. Die Bauweise des Gehäuses bzw. die Anordnung der Wellen des Getriebes muss der Anwendung gemäß angepasst sein.

Im Rahmen der EP 0 759 129 B1 der Anmelderin ist ein unter Last schaltbares, mehrgängiges Wendegetriebe mit mindestens einer Eingangswelle, Vorgelegewellen und Zahnrädern, die einen Antriebsrädersatz bilden sowie auf den Vorgelegewellen angeordneten Schaltkupplungen mit Losrädern, die zur Gang- und Richtungsschaltung wahlweise drehfest mit einer der Vorgelegewellen verbindbar sind, beschrieben. Hierbei bilden ein Festrad und mit diesem in ständigem Eingriff befindliche Losräder den Antriebsrädersatz; ferner bildet ein auf einer Vorgelegewelle angeordnetes und mit zwei Losrädern in ständigem Eingriff stehendes Festrad eine Abtriebsräderkette; die Vorgelegewellen sind durch Festräder und ein Losrad miteinander verbunden. Dieses Dokument offenbart die Merkmale des Oberbegriffs des Anspruchs 1. Ein weiteres derartiges Getriebe ist Gegenstand der EP 0 796 400 B1 der Anmelderin.

Der vorliegenden Erfindung liegt die Aufgabe zugrunde, ein schaltbares, mehrgängiges Wendegetriebe anzugeben, welches im Vergleich zu dem Stand der Technik eine höhere Leistung aufweist. Zudem soll das erfindungsgemäße Getriebe einen guten Wirkungsgrad aufweisen und robust sein.

Diese Aufgabe wird durch die Merkmale des Patentanspruchs 1 gelöst. Weitere Ausgestaltungen und Vorteile gehen aus den Unteransprüchen hervor.

Demnach wird ein unter Last schaltbares Getriebe vorgeschlagen, umfassend eine Eingangswelle, Vorgelegewellen, wobei auf den Vorgelegewellen Zahnräder und/oder über Schaltkupplungen zur Gang- oder Richtungsschaltung drehfest mit den Vorgelegewellen verbindbare Losräderangeordnet sind und eine Ausgangswelle, wobei die Übersetzungsverhältnisse durch Stirnradstufen und zumindest eine schaltbare Planetenstufe generiert werden.

Gemäß der Erfindung werden in Abhängigkeit von den Kupplungszuständen zwei Kraftflüsse erzeugt, welche jeweils an dem selben Festrad zusammenkommen. Die Planetenstufe ist vorzugsweise in Kraftflussrichtung zwischen diesem Festrad und der Abtriebswelle angeordnet. Je nach Ausführung kann das Getriebe als Vier- oder als Acht-Gang-Getriebe ausgebildet sein.

Die Erfindung wird im folgenden anhand der beigefügten Figuren beispielhaft näher erläutert. Es stellen dar:
Figur 1: Ein Getriebeschema eines erfindungsgemäßen Getriebes, welches insbesondere für einen Radlader geeignet ist;
Figur 2: Ein Getriebeschema eines erfindungsgemäßen Getriebes, welches insbesondere für einen Dumper geeignet ist; und
Figur 3: Eine bevorzugte Ausführungsform der Lageranordung für die die Planetenstufe aufweisende Welle.

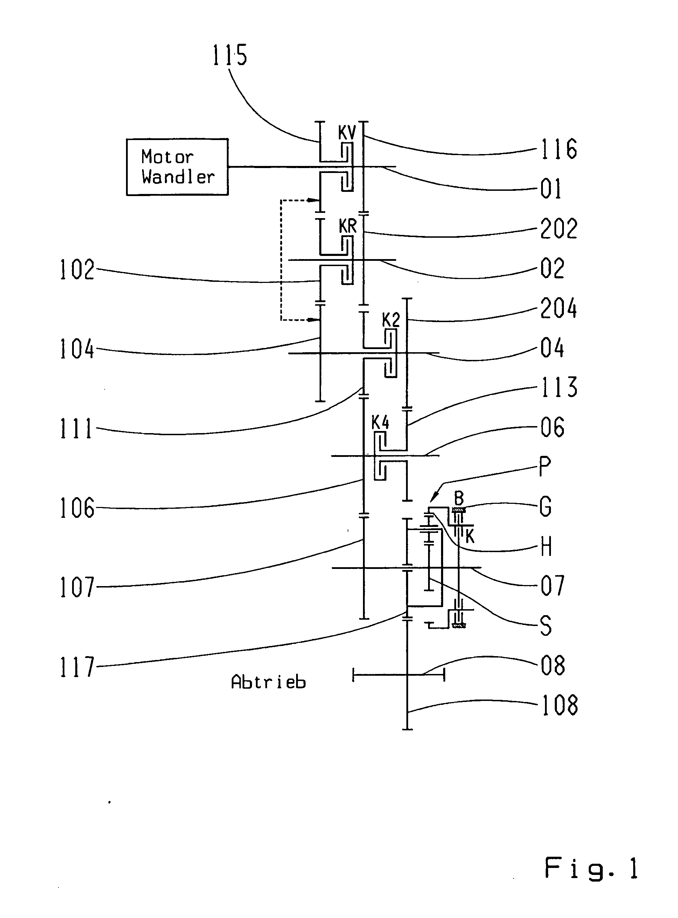

Das in Figur 1 gezeigte Getriebe, was insbesondere für einen Radlader geeignet ist, umfasst eine Eingangswelle 01, auf der eine Lastschaltkupplung KV (Vorwärtskupplung) angeordnet ist, über die das Losrad 115 mit der Eingangswelle 01 verdrehfest verbindbar ist. Auf der Eingangswelle 01 ist zudem ein Festrad 116 vorgesehen, welches mit dem Festrad 202 der Vorgelegewelle 02 in ständigem Eingriff steht. Auf der Vorgelegewelle 02 ist eine Lastschaltkupplung KR (Rückwärtskupplung) vorgesehen, welche ein Losrad 102 mit der Vorgelegewelle 02 lösbar verdrehfest verbindet. Das Losrad 102 und das Losrad 115 der Eingangswelle 01 stehen mit einem Festrad 104 auf der Vorgelegewelle 04 in ständigem Eingriff; auf der Vorgelegewelle 04 sind ferner ein über die Kupplung K2 mit der Vorgelegewelle 04 verdrehfest verbindbares Losrad 111 und ein Festrad 204 vorgesehen, wobei das Losrad 111 mit einem auf der weiteren Vorgelegewelle 06 angeordneten Festrad 106 in ständigem Eingriff steht und wobei das Festrad 204 mit einem auf der weiteren Vorgelegewelle 06 angeordneten Losrad 113 in ständigem Eingriff steht. Wie der Figur 1 zu entnehmen ist, ist das Losrad 113 über die Kupplung K4 mit der Vorgelegewelle 06 verdrehfest verbindbar.

Das Festrad 106 der Vorgelegewelle 06 befindet sich mit einem auf der Vorgelegewelle 07 angeordneten Festrad 107 in ständigem Eingriff. Auf der Vorgelegewelle 07 ist ein Losrad 117 vorgesehen, welches sich in ständigem Eingriff mit einem auf der Ausgangswelle 08 angeordneten Festrad 108 befindet. Gemäß der Erfindung ist in Kraftflussrichtung zwischen dem Festrad 107 und dem Festrad 108 der Ausgangswelle 08 eine schaltbare Planetenstufe P angeordnet, deren Sonnenrad S mit der Vorgelegewelle 07 verdrehfest verbunden ist. Hierbei ist eine Bremse B vorgesehen, welche das Hohlrad H mit dem Gehäuse G verbindet; des weiteren sind über eine Kupplung K zwei Komponenten der Planetenstufe P, vorzugsweise das Sonnenrad S mit dem Hohlrad H, lösbar miteinander verbindbar. Wenn nun die Bremse B geschlossen und die Kupplung K geöffnet ist, dann wird die Leistung von dem Festrad 107 über die Planetenstufe P auf das Losrad 117 übertragen. Dahingegen wird bei geöffneter Bremse B und geschlossener Kupplung K die Leistung direkt vom Festrad 107 auf das Losrad 117 ohne eine Veränderung der Übersetzung übertragen. (Die Planetenstufe läuft im Blockbetrieb.)

Dieses Getriebe weist vier Vorwärts- und vier Rückwärtsgänge auf, wobei zu Realisierung der Gänge bei geschlossener Vorwärtskupplung KV für die Vorwärtsgänge bzw. Rückwärtskupplung KR für die Rückwärtsgänge je zwei weitere Schaltelemente in zwei Kraftflüssen abwechselnd betätigt werden. Die Kupplungen KR und KV genügen den an einen Radlader gestellten Reversieranforderungen, da sie unter Last geschaltet werden können. Für den ersten Vorwärtsgang sind neben der Kupplung KV die Kupplung K2 und die Bremse B geschlossen, wobei die Räder 115, 104, 111, 106, 107, Planetenstufe P, 117 und 108 die Leistung auf die Ausgangswelle 08 übertragen. Der zweite Vorwärtsgang ergibt sich durch Schließen der Bremse B und der Kupplung K4; die Leistung wird durch die Räder 115, 104, 204, 113, 106, 107, Planetenstufe P, 117 und 108 auf die Ausgangswelle 08 übertragen. Für den dritten Vorwärtsgang werden die Kupplungen K2 und K geschlossen, wobei die Räder 115, 104, 111, 106, 107, 117 und 108 die Leistung auf die Ausgangswelle 08 übertragen. Zum Schalten des vierten Vorwärtsganges werden die Kupplungen K4 und K geschlossen, sodass die Leistung über die Räder 115, 104, 204, 113, 106, 107, 117 und 108 auf die Ausgangswelle 08 übertragen wird.

Für die Rückwärtsgänge wird die Kupplung KR geschlossen. Hierbei ergibt sich der erste Rückwärtsgang durch Schließen der Kupplung K2 und der Bremse B; die Leistung wird von der Eingangswelle 01 über die Räder 116, 202, 102, 104, 111, 106, 107, Planetenstufe, 117 und 108 auf die Ausgangswelle 08 übertragen. Der zweite Rückwärtsgang ergibt sich durch Schließen der Kupplung K4 und der Bremse B, wobei die Leistung über die Räder 116, 202, 102, 104, 204, 113, 106, 107, Planetenstufe P, 117 und 108 auf die Ausgangswelle 08 übertragen wird. Gemäß der Erfindung wird der dritte Rückwärtsgang durch Schließen der Kupplungen K2 und K geschaltet, wobei die Leistung über die Räder 116, 202, 102, 104, 111, 106, 107, 117 und 108 auf die Ausgangswelle 08 übertragen wird. Schließlich werden für den vierten Rückwärtsgang die Kupplungen K4 und K geschlossen; hierbei übertragen die Räder 116, 202, 102, 104, 204, 113, 106, 107, 117 und 108 die Leistung auf die Ausgangswelle 08.

Gemäß der Erfindung sind also in Abhängigkeit von den Kupplungszuständen zwei Kraftflüsse erzeugbar, welche jeweils an dem selben Festrad 107 zusammenkommen, wobei dieses Festrad nicht auf der Ausgangswelle 08 angeordnet ist.

Durch Ersetzen der Kupplungen KV und KR durch zwei auf der Eingangswelle 01 angeordnete Synchronisierungen oder Klauenkupplungen SV und SR und Hinzufügen von zwei weiteren Vorgelegewellen 03 und 05 mit entsprechenden Rädern und Kupplungen ergibt sich in vorteilhafter Weise ein Acht-Gang Getriebe, welches insbesondere für Dumper geeignet ist.

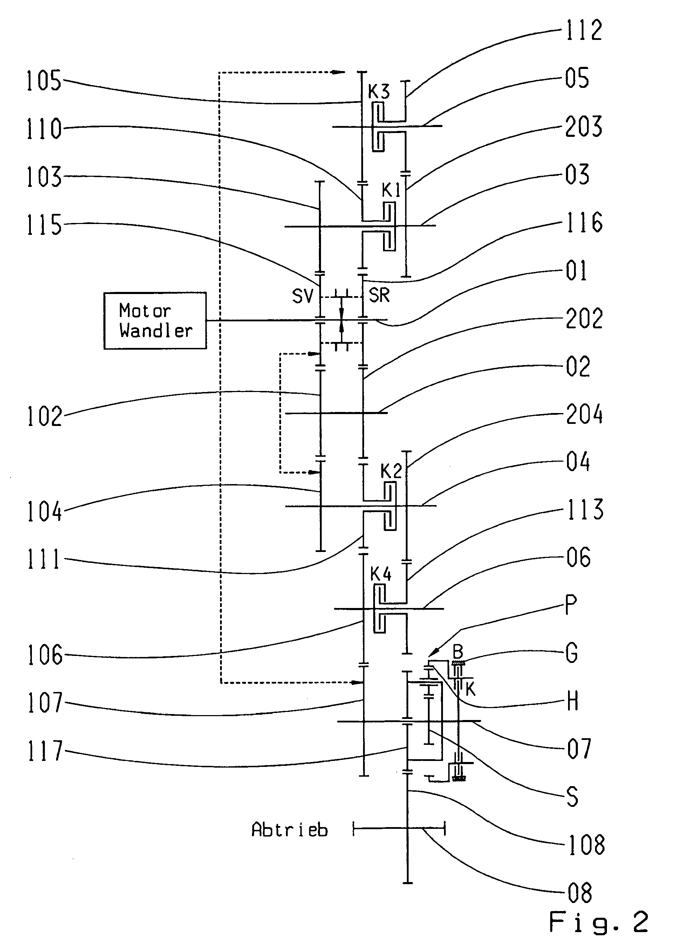

Ein derartiges Getriebe ist Gegenstand der Figur 2. Demnach unterscheidet sich das Acht-Gang-Getriebe von dem in Figur 1 gezeigten Getriebe dadurch, dass auf der Vorgelegewelle 02 kein Schaltelement angeordnet ist und dass auf der Eingangswelle 01 anstelle der Kupplung KV zwei Synchronisierungen oder Klauenkupplungen SV für die Vorwärts- und SR für die Rückwärtsgänge, wobei bei Fahrzeugstillstand geschaltet werden kann, angeordnet sind. Die Synchronisierungen oder Klauen können als Doppel- oder Einfachsynchronisierungen oder auch als Klauen ausgebildet sein. Ferner ist eine weitere Vorgelegewellen 03 vorgesehen, die zwei Festräder 103 und 203 und ein über eine auf der Vorgelegewelle 03 vorgesehene Kupplung K1 mit der Vorgelegewelle 03 verdrehfest verbindbares Losrad 110 aufweist, wobei das Festrad 103 mit dem Losrad 115 der Eingangswelle 01 in ständigem Eingriff steht.

Des weiteren ist eine weitere Vorgelegewelle 05 vorgesehen, welche ein Festrad 105, das sich mit dem Losrad 110 der Vorgelegewelle 03 in ständigem Eingriff befindet und ein über eine auf der Vorgelegewelle 05 vorgesehene Kupplung K3 mit der Vorgelegewelle 05 verdrehfest verbindbares Losrad 112 aufweist. Hierbei befindet sich das Losrad 112 mit dem Festrad 203 der Vorgelegewelle 03 in ständigem Eingriff; das Festrad 105 befindet sich mit dem auf der Vorgelegewelle 07 angeordneten Festrad 107 In ständigem Eingriff.

Zur Realisierung der acht Vorwärts- und acht Rückwärtsgäng werden bei geschlossener Kupplung SV für die Vorwärtsgänge bzw. SR für die Rückwärtsgänge je zwei weitere Schaltelemente in zwei Kraftflüssen abwechselnd betätigt. Hierbei entspricht der erste Gang des Getriebes gemäß Figur 1 dem zweiten Gang, der zweite Gang des Getriebes gemäß Figur 1 dem vierten Gang, der dritte Gang des Getriebes gemäß Figur 1 dem sechsten Gang und der vierte Gang des Getriebes gemäß Figur 1 dem achten Gang.

Der erste Vorwärtsgang ergibt sich demnach durch Schließen der SV, der Kupplung K1 und der Bremse B; die Leistung wird durch die Räder 115, 103, 110, 105, 107, Planetenstufe, 117 und 108 übertragen. Für den zweiten Vorwärtsgang sind die Kupplung K2 und die Bremse B geschlossen, wobei die Räder 115, 104, 111, 106, 107, Planetenstufe P, 117 und 108 die Leistung auf die Ausgangswelle 08 übertragen. Im dritten Vorwärtsgang sind die Kupplung K3 und die Bremse B geschlossen und die Leistung wird durch die Räder 115, 103, 203, 112, 105, 107, Planetenstufe, 117 und 108 übertragen. Der vierte Vorwärtsgang ergibt sich durch Schließen der Bremse B und der Kupplung K4; die Leistung wird durch die Räder 115, 104, 204, 113, 106, 107, Planetenstufe, 117 und 108 auf die Ausgangswelle 08 übertragen. Im fünften Gang sind die Kupplungen K1 und K geschlossen, wobei die Leistung durch die Räder 115, 103, 110, 105, 107, 117 und 108 auf die Ausgangswelle 08 übertragen wird. Für den sechsten Vorwärtsgang werden gemäß Figur 1 die Kupplungen K2 und K geschlossen, wobei die Räder 115, 104, 111, 106, 107, 117 und 108 die Leistung auf die Ausgangswelle 08 übertragen. Ferner ergibt sich der siebte Vorwärtsgang durch Schließen der Kupplungen K3 und K; die Leistung wird durch die Räder 115, 103, 203, 112, 105, 107, 117 und 108 übertragen. Zum Schalten des achten Vorwärtsganges werden die Kupplungen K4 und K geschlossen, sodass die Leistung über die Räder 115, 104, 204, 113, 106, 107, 117 und 108 auf die Ausgangswelle 08 übertragen wird.

Der erste Rückwärtsgang ergibt sich durch Schließen der Synchronisierung SR, der Kupplung K1 und der Bremse B; die Leistung wird hierbei durch die Räder 116, 202, 102, 104, 115, 103, 110, 105, 107, Planetenstufe, 117 und 108 auf die Ausgangswelle 08 übertragen. Der zweite Rückwärtsgang wird durch Schließen der Kupplung K2 und der Bremse B geschaltet; die Leistung wird von der Eingangswelle 01 über die Räder 116, 202, 102, 104, 111, 106, 107, Planetenstufe, 117 und 108 auf die Ausgangswelle 08 übertragen. Im dritten Rückwärtsgang ist die Kupplung K3 und die Bremse B geschlossen, sodass die Leistung über die Räder 116, 202, 102, 104, 115, 103, 203, 112, 105, 107, Planetenstufe, 117 und 108 übertragen wird. Der vierte Rückwärtsgang ergibt sich durch Schließen der Kupplung K4 und der Bremse B, wobei die Leistung über die Räder 116, 202, 102, 104, 204, 113, 106, 107, Planetenstufe, 117 und 108 auf die Ausgangswelle 08 übertragen wird.

Des weiteren ergibt sich der fünfte Rückwärtsgang durch Schließen der Kupplungen K1 und K, wobei die Leistung durch die Räder 116, 202, 102, 104, 115, 103, 110, 105, 107, 117 und 108 übertragen wird. Gemäß der Erfindung wird der sechste Rückwärtsgang durch Schließen der Kupplungen K2 und K geschaltet, wobei die Leistung über die Räder 116, 202, 102, 104, 111, 106, 107, 117 und 108 auf die Ausgangswelle 08 übertragen wird. Im siebten Gang sind die Kupplungen K3 und K geschlossen und die Leistung wird durch die Räder 116, 202, 102, 104, 115, 103, 203, 112, 105, 107, 117 und 108 übertragen. Schließlich werden für den achten Rückwärtsgang die Kupplungen K4 und K geschlossen; hierbei übertragen die Räder 116, 202, 102, 104, 204, 113, 106, 107, 117 und 108 die Leistung auf die Ausgangswelle 08.

An jedem Kraftfluss bis zum Festrad 107 ist jeweils eine Kupplung beteiligt.

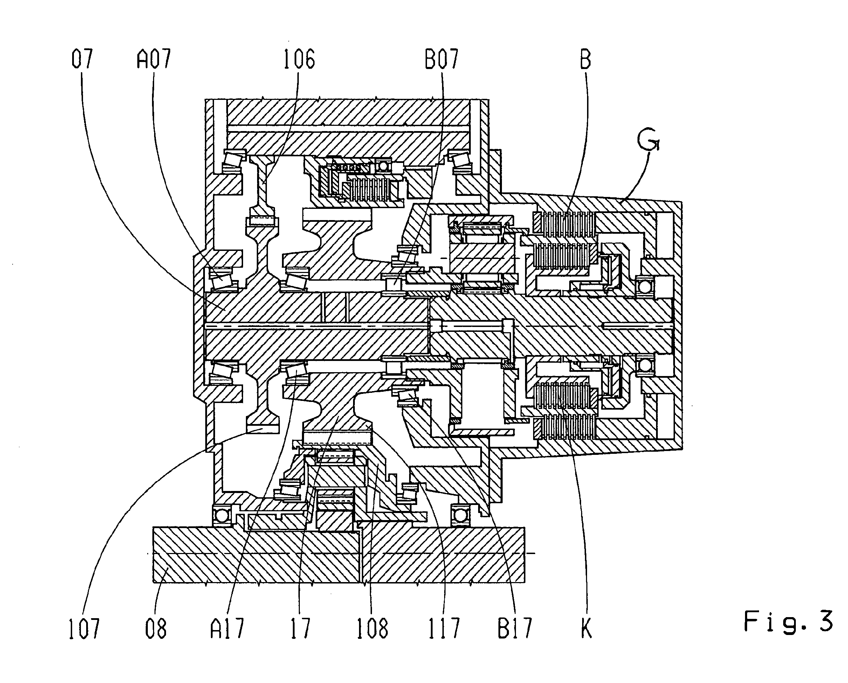

In Figur 3 ist eine besonders vorteilhafte Lageranordnung für die Vorgelegewelle 07 dargestellt. Nach dem Stand der Technik ist für die die Planetenstufe P aufweisende Vorgelegewelle 07 eine aufwendige Lagerung erforderlich, bei der an vier Lagerstellen Gehäusewände an die Lager herangeführt werden, um die Kräfte zu übertragen. Erfindungsgemäß sind die Lager so angeordnet, dass hierbei eine Lagerstelle am Gehäuse entfallen kann.

Die Vorgelegewelle 07 ist mit dem Lager A07 im Gehäuse G und mit dem Lager B07 in der Hohlwelle 17 abgelagert. Die Hohlwelle 17 ist drehfest mit dem Losrad 117 verbunden. Radialkräfte werden zum einen vom Lager A07 direkt auf das Gehäuse G und zum anderen von Lager B07 über das Lager B17 auf das Gehäuse G übertragen. Der Figur ist zu entnehmen, dass die Hohlwelle 17 mit dem Lager A17 auf der Vorgelegewelle 07 und mit dem Lager B17 im Gehäuse G abgelagert ist. Die Radialkräfte vom Lager A17 werden anteilmäßig von den Lagern A07 und B07 über Lager B17 in das Gehäuse G übertragen; Radialkräfte vom Lager B17 werden direkt im Gehäuse G abgestützt.

Des Weiteren können Axialkräfte sowohl von der Vorgelegewelle 07 über das Lager A17 auf die Hohlwelle 17 als auch von Hohlwelle 17 über das Lager A07 auf die Vorgelegewelle 07 übertragen werden. Die Axialkräfte können somit immer von Lager A07 und B17 im Gehäuse G abgestützt werden. Durch die Anordnung des Lagers B07 in der Wirklinie des Lagers B17 wirken keine zusätzlichen Kippkräfte auf das Lagersystem.

Bei den erfindungsgemäßen Ausführungsformen kann die Abtriebsstufe mit einem Längsdifferential (auch abschaltbar) ausgeführt sein.

Durch die erfindungsgemäße Konzeption werden Getriebe für Dumper oder Radlader zur Verfügung gestellt, die einen guten Wirkungsgrad aufweisen und hohe Leistungen übertragen können. In vorteilhafter Weise kann durch den Getriebeaufbau eine große Teilegleichheit erzielt werden: die meisten benötigten Teile mit Ausnahme der Lastschaltkupplungen KR und KV können baugleich sein.

Selbstverständlich fällt auch jede konstruktive Ausbildung, insbesondere jede räumliche Anordnung der Vorgelegewellen, der Räder, der Planetenstufe und der Schaltelemente an sich sowie zueinander und soweit technisch sinnvoll, unter den Schutzumfang der vorliegenden Ansprüche ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 01: Eingangswelle
- 02: Vorgelegewelle
- 03: Vorgelegewelle
- 04: Vorgelegewelle
- 05: Vorgelegewelle
- 06: Vorgelegewelle
- 07: Vorgelegewelle
- 08: Ausgangswelle
- 17: Hohlwelle
- 102: Festrad bzw. Losrad RL
- 103: Festrad
- 104: Festrad
- 105: Festrad
- 106: Festrad
- 107: Festrad
- 108: Festrad
- 110: Losrad
- 111: Losrad
- 112: Losrad
- 113: Losrad
- 115: Losrad
- 116: Losrad bzw. Losrad RL
- 202: Festrad
- 203: Festrad
- 204: Festrad
- KV: Vorwärtskupplung
- KR: Rückwärtskupplung
- K1: Kupplung
- K2: Kupplung
- K3: Kupplung
- K4: Kupplung
- K: Kupplung
- B: Bremse
- G: Gehäuse
- P: Planetenstufe
- S: Sonnenrad
- H: Hohlrad
- SR: Synchronisierung oder Klauenkupplung
- SV: Synchronisierung oder Klauenkupplung
- A07: Lager
- A17: Lager
- B07: Lager
- B17: Lager

## Patentansprüche

1. Schaltbares mehrgängiges Wendegetriebe, umfassend eine Eingangswelle (01), Vorgelegewellen (02, 03, 04, 05, 06, 07), eine als Synchronisierung, Klauenkupplung oder Lastschaltkupplung ausgebildete Schaltkupplung für Vorwärtsfahrt (KV, SV), welche auf der Eingangswelle (01) angeordnet ist und über welche ein auf der Eingangswelle (01) angeordnetes erstes Losrad (115) mit der Eingangswelle (01) verdrehfest verbindbar ist und eine Schaltkupplung für Rückwärtsfahrt (KR, SR), welche entweder als Lastschaltkupplung (KR) auf einer Vorgelegewelle (02) angeordnet ist und über welche ein auf dieser Vorgelegewelle (02) angeordnetes Losrad (102) mit dieser Vorgelegewelle (02) verdrehfest verbindbar ist, oder als Synchronisierung (SR) oder Klauenkupplung auf der Eingangswelle (01) angeordnet ist und über welche ein auf der Eingangswelle (01) angeordnetes zweites Losrad (116) mit der Eingangswelle (01) verdrehfest verbindbar ist wobei auf den weiteren Vorgelegewollen (03, 04, 05, 06, 07) Zahnräder und/oder über Schaltkupplungen zur Gang- oder Richtungsschaltung (K1, K2, K3, K4, K, B) drehfest mit den weiteren Vorgelegewellen (03, 04, 05, 06, 07) verbindbare weitere Losräder (110, 111, 122, 113) angeordnet sind, und eine Ausgangswelle (08), **dadurch gekennzeichnet, dass** die Übersetzungsverhältnisse durch Stirnradstufen und zumindest eine schaltbare Planetenstufe (P) generiert werden, wobei in Abhängigkeit der Schaitzustände der Kupplungen (KV, KR, K1, K2, K3, K4,) und/oder Synchronisierungen (SR) oder Klauenkupplungen (SV, SR) zwei Kraftflüsse erzeugbar sind, welche jeweils an demselben Festrad (107) zusammenkommen, und dieses Festrad (107) mit einem Sonnenrad (S) der Planetenstufe (P) drehfest verbunden ist und die Planetenstufe (P) in Kraftflussrichtung zwischen diesem Festrad (107) und der Abtriebswelle (08) angeordnet ist und die Planetenstufe zwei Schaltstellungen aufweist, wobei in einer ersten Schaltstellung der Planetenstufe (P) das Sonnenrad (S) drehfest mit einem Hohlrad (H) der Planetenstufe über eine Kupplung (K) verbunden ist und in einer zweiten Schaltstellung der Planetenstufe (P) das Hohlrad (H) drehfest mit einem Gehäuse (G) über eine Bremse (B) verbunden ist, wobei in der ersten Schaltstellung die Kupplung (K) geschlossen und die Bremse (B) geöffnet ist und in der zweiten Schaltstellung die Bremse (B) geschlossen und die Kupplung (K) geöffnet ist.

2. Schaltbares mehrgängiges Wendegetriebe, nach Anspruch 1,
**dadurch gekennzeichnet, dass** das Wendegetriebe vier Vorwärtsgänge und vier Rückwärtsgänge aufweist, wobei die Schaltkupplung für Vorwärtsfahrt (KV) als Lastschaltkupplung ausgebildet ist und die Schaltkupplung für Rückwärtsfahrt (KR) als Lastschaltkupplung ausgebildet ist.

3. Schaltbares mehrgängiges Wendegetriebe, nach Anspruch 1,
**dadurch gekennzeichnet, dass** das Wendegetriebe acht Vorwärtsgänge und acht Rückwärtsgänge aufweist, wobei die Schaltkupplung für Vorwärtsfahrt (SV) als Synchronisierung oder Klauenkupplung ausgebildet ist und die Schaltkupplung für Rückwärtsfahrt (SR) als Synchronisierung oder Klauenkupplung ausgebildet ist.

4. Schaltbares mehrgängiges Wendegetriebe, nach Anspruch 1,
**dadurch gekennzeichnet, dass** das Wendegetriebe vier Vorwärtsgänge und vier Rückwärtsgänge aufweist, wobei zu Realisierung der Gänge bei geschlossener Vorwärtskupplung (KV) für die Vorwärtsgänge bzw. bei geschlossener Rückwärtskupplung (KR) für die Rückwärtsgänge je zwei weitere Schaltelemente (K1, K2, B, K) in zwei Kraftflüssen abwechselnd betätigt werden.

## Claims

1. Switchable multiple-speed reversing gearbox, comprising an input shaft (01), idler shafts (02, 03, 04, 05, 06, 07), a clutch for forward driving (KV, SV) which is configured as a synchronizer, dog clutch or power-shift clutch, is arranged on the input shaft (01), and via which a first idler gear (115) which is arranged on the input shaft (01) can be connected fixedly to the input shaft (01) so as to rotate with it, and a clutch for reverse driving (KR, SR) which is either arranged as a power-shift clutch (KR) on an idler shaft (02) and via which an idler gear (102) which is arranged on the said idler shaft (02) can be connected fixedly to the said idler shaft (02) so as to rotate with it, or is arranged as a synchronizer (SR) or dog clutch on the input shaft (01) and via which a second idler gear (116) which is arranged on the input shaft (01) can be connected fixedly to the input shaft (01) so as to rotate with it, gearwheels and/or further idler gears (110, 111, 112, 113) which can be connected fixedly via clutches for speed or direction shifting (K1, K2, K3, K4, K, B) to the further idler shafts (03, 04, 05, 06, 07) so as to rotate with them being arranged on the further idler shafts (03, 04, 05, 06, 07), and further comprising an output shaft (08), **characterized in that** the transmission ratios are generated by spur gear stages and at least one switchable planetary stage (P), it being possible for two force flows to be generated depending on the switching states of the clutches (KV, KR, K1, K2, K3, K4) and/or synchronizers (SR) or dog clutches (SV, SR), which force flows come together in each case at the same fixed gear (107), and the said fixed gear (107) being connected fixedly to a sun gear (S) of the planetary stage (P) so as to rotate with it, and the planetary stage (P) being arranged in the direction of force flow between the said fixed gear (107) and the output shaft (08), and the planetary stage have two switching positions, the sun gear (S) being connected fixedly to an internal gear (H) of the planetary stage so as to rotate with it via a clutch (K) in a first switching position of the planetary stage (P), and the internal gear (H) being connected fixedly to a housing (G) so as to rotate with it via a brake (B) in a second switching position of the planetary stage (P), the clutch (K) being closed and the brake (B) being open in the first switching position and the brake (B) being closed and the clutch (K) being open in the second switching position.

2. Switchable multiple-speed reversing gearbox according to Claim 1, **characterized in that** the reversing gearbox has four forward speeds and four reverse speeds, the clutch for forward driving (KV) being configured as a power-shift clutch and the clutch for reverse driving (KR) being configured as a power-shift clutch.

3. Switchable multiple-speed reversing gearbox according to Claim 1, **characterized in that** the reversing gearbox has eight forward speeds and eight reverse speeds, the clutch for forward driving (SV) being configured as a synchronizer or dog clutch and the clutch for reverse driving (SR) being configured as a synchronizer or dog clutch.

4. Switchable multiple-speed reversing gearbox according to Claim 1, **characterized in that** the reversing gearbox has four forward speeds and four reverse speeds, in each case two further switching elements (K1, K2, B, K) being actuated alternately in two power flows in order to realize the speeds for the forward speeds when the forward clutch (KV) is closed and for the reverse speeds when the reverse clutch (KR) is closed.

## Revendications

1. Boîte de vitesses manuelle réversible à plusieurs rapports, comprenant un arbre d'entrée (01), des arbres secondaires (02, 03, 04, 05, 06, 07), un embrayage de marche avant (KV, SV) réalisé sous forme de synchronisation, d'embrayage à griffes, ou d'embrayage à changement de rapports sous charge, qui est disposé sur l'arbre d'entrée (01) et par le biais duquel un premier pignon fou (115) disposé sur l'arbre d'entrée (01) peut être connecté de manière solidaire en rotation avec l'arbre d'entrée (01) et un embrayage de marche arrière (KR, SR) qui est disposé en tant qu'embrayage à changement de rapports sous charge (KR) sur un arbre secondaire (02) et par le biais duquel un pignon fou (102) disposé sur cet arbre secondaire (02) peut être connecté de manière solidaire en rotation à cet arbre secondaire (02), ou bien qui est disposé en tant que synchronisation (SR) ou en tant qu'embrayage à griffes sur l'arbre d'entrée (01) et par le biais duquel un deuxième pignon fou (116) disposé sur l'arbre d'entrée (01) peut être connecté de manière solidaire en rotation à l'arbre d'entrée (01), des roues dentées étant disposées sur les autres arbres secondaires (03, 04, 05, 06, 07) et/ou d'autres pignons fous (110, 111, 112, 113) pouvant être connectés de manière solidaire en rotation aux autres arbres secondaires (03, 04, 05, 06, 07) par le biais d'embrayages en vue du changement de rapports ou de direction (K1, K2, K3, K4, K, B) étant disposés sur les autres arbres secondaires (03, 04, 05, 06, 07), et un arbre de sortie (08), **caractérisée en ce que** les rapports de multiplication sont produits par des étages de pignons droits et par au moins un étage planétaire commutable (P), deux flux de forces pouvant être générés en fonction des états de commutation des embrayages (KV, KR, K1, K2, K3, K4), et/ou des synchronisations (SR) ou des embrayages à griffes (SV, SR), lesquels flux de forces se rejoignent à chaque fois sur le même pignon fixe (107), et ce pignon fixe (107) étant connecté de manière solidaire en rotation à une roue solaire (S) de l'étage planétaire (P), et l'étage planétaire (P) étant disposé dans la direction du flux de forces entre ce pignon fixe (107) et l'arbre de sortie (08) et l'étage planétaire présentant deux positions de commutation, dans une première position de commutation de l'étage planétaire (P), la roue solaire (S) étant connectée de manière solidaire en rotation à une couronne dentée (H) de l'étage planétaire par le biais d'un embrayage (K) et dans une deuxième position de commutation de l'étage planétaire (P), la couronne dentée (H) étant connectée de manière solidaire en rotation à un boîtier (G) par le biais d'un frein (B), dans la première position de commutation, l'embrayage (K) étant fermé et le frein (B) étant ouvert et dans la deuxième position de commutation, le frein (B) étant fermé et l'embrayage (K) étant ouvert.

2. Boîte de vitesses manuelle réversible à plusieurs rapports selon la revendication 1, **caractérisée en ce que** la boîte de vitesses réversible présente quatre rapports de marche avant et quatre rapports de marche arrière, l'embrayage de marche avant (KV) étant réalisé sous forme d'embrayage à changement de rapports sous charge et l'embrayage de marche arrière (KR) étant réalisé sous forme d'embrayage à changement de rapports sous charge.

3. Boîte de vitesses manuelle réversible à plusieurs rapports selon la revendication 1, **caractérisée en ce que** la boîte de vitesses réversible présente huit rapports de marche avant et huit rapports de marche arrière, l'embrayage de marche avant (SV) étant réalisé sous forme de synchronisation ou d'embrayage à griffes et l'embrayage de marche arrière (SR) étant réalisé sous forme de synchronisation ou d'embrayage à griffes.

4. Boîte de vitesses manuelle réversible à plusieurs rapports selon la revendication 1, **caractérisée en ce que** la boîte de vitesses réversible présente quatre rapports de marche avant et quatre rapports de marche arrière, à chaque fois deux éléments de changement de vitesses supplémentaires (K1, K2, B, K) étant actionnés en alternance dans deux flux de forces pour réaliser les rapports lorsque l'embrayage de marche avant (KV) pour les rapports de marche avant est fermé ou lorsque l'embrayage de marche arrière (KR) pour les rapports de marche arrière est fermé.
